Europäisches Patentamt

European Patent Office

Office européen des brevets

(19)

(11) **EP 1 724 703 A1**

(12) **EUROPEAN PATENT APPLICATION**

(43) Date of publication:
**22.11.2006 Bulletin 2006/47**

(51) Int Cl.:
*G06K 9/62* (2006.01)

(21) Application number: **05104252.1**

(22) Date of filing: **19.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **SIEMENS AKTIENGESELLSCHAFT
80333 München (DE)**

(72) Inventor: **Runkler, Thomas
81929, München (DE)**

(54) **Method and system for finding ellipsoidal clusters in relational data**

(57)     The method for finding ellipsoidal clusters in relational data, the latter describing relations between physical entities, comprises the steps of computing relations between pairs of physical entities based on physical measurements, and clustering the physical entities using a clustering algorithm. The clustering algorithm processes the relations directly as relational data by creating object data only locally. Furthermore, the clustering algorithm uses metrics for computing ellipsoidal clusters.

FIG 6

EP 1 724 703 A1

**Description**

The present invention relates to a method and a system for finding ellipsoidal clusters in relational data. Relational data describe relations between physical entities. A physical entity can be any kind of object from the physical world. Examples of physical entities include sensors, mobile units such as robots or cars, genes whose expression can be measured by DNA Microarray technology, documents or files. The relations between these physical entities can be distances or similarity values. Distances can be physical distances, for example between mobile units. Similarity values can describe the similarity between physical entities. For example, two very different documents would have a low similarity value. These relations form relational data. Most clustering models cannot process relational data themselves. They process object data. Therefore, the relational data first have to be projected to object data.

Bezdek, J. C., "Pattern Recognition with Fuzzy Objective Function Algorithms", Plenum Press, New York, 1981, S. 65-70, describes a popular clustering model for *object* data, a *fuzzy c-means* (FCM) model. It is defined as the following problem: Given an object data set $X = \{x_1,...,x_n\} \subset IR^p$, $p \in \{1,2,...\}$, a number of clusters $c \in \{2,...,n\text{-}1\}$, a fuzzifier $m > 1$, and a norm |.| on $IR$, minimize an objective function

$$J_{\text{FCM}} = \sum_{i=1}^{c} \sum_{k=1}^{n} u_{ik}^m d_{ik}^2,\tag{1}$$

$d_{ik}=|v_i\text{-}x_k|$, $i = 1,...,c$, $k=1,...,n$, subject to a set of cluster centres $V=\{v_1,...,v_c\} \subset IR^p$ and a partition matrix $U \in M_{\text{fcn}}$, where

$$M_{\text{fcn}} = \{U \in [0,1]^{c \times n} \mid$$

$$\sum_{i=1}^{c} u_{ik} = 1, k = 1,...,n,$$

$$\sum_{k=1}^{n} u_{ik} > 0, i = 1,...,c \quad \}.\tag{2}$$

The necessary conditions for extrema of $J_{\text{FCM}}$ are

$$u_{ik} = 1 \ / \ \sum_{j=1}^{c} \left( \frac{d_{ik}}{d_{jk}} \right)^{\frac{2}{m-1}},\tag{3}$$

$$v_i = \frac{\sum_{k=1}^{n} u_{ik}^m x_k}{\sum_{k=1}^{n} u_{ik}^m},\tag{4}$$

$i=1,...,c$, $k=1,...,n$. Optimization of the FCM model can be done by randomly initializing $V$ and then alternatingly computing $U$ and $V$ by (3) and (4). For simplicity (and in order to keep computation times easily predictable), no explicit termination criterion is used here. Instead, simply $t$ steps of the alternating optimization are performed.

Fuzzy c-medoids (FCMdd) optimizes the FCM objective function (1) for $U \in M_{fcn}$ (2), and additionally requires $V \subset X$. The cluster centres $V$ are then called medoids, hence this clustering model is called fuzzy c-medoids (FCMdd) model. This model is described in R. Krishnapuram, A. Joshi, O. Nasraoui, and L. Yi, "Low-complexity fuzzy relational clustering algorithms for web mining", IEEE Transactions on Fuzzy Systems, 9(4): 595-607, August 2001. Optimization of the FCMdd model can be done using alternating optimization, just as in FCM. The partition matrix $U$ is computed using (3), but the choice of $V$ is a discrete optimization problem that can simply be solved using exhaustive search: The contribution of the i [th] cluster to the objective function $J_{\text{FCMdd}} = J_{\text{FCM}}$ (1) is

$$J_i^* = \sum_{k=1}^{n} u_{ik}^m d_{ik}^2, \qquad\qquad (5)$$

so $J = \sum_{i=1}^{c} J_i^*$. If say $v_i = x_j$, then $d_{ik} = |v_i - x_k| = |x_j - x_k| = r_{jk}$, and so

$$J_i^* = J_{ij} = \sum_{k=1}^{n} u_{ik}^m r_{jk}^2. \qquad\qquad (6)$$

So the best choice for each cluster centre is $v_i = x_{w_i}$, $i=1,...,n$, with

$$w_i = \operatorname{argmin}\{J_{i1},...,J_{in}\}. \qquad\qquad (7)$$

Here, the difference between distances $D$ between cluster centres and data points and relations $R$ between pairs of data points is important.

A method that can process relational data directly is relational fuzzy c-medoids (RFCMdd). One of the motivations for the development of FCMdd was to reduce the computational complexity of fuzzy clustering, but the constraint $V \subset X$ also makes FCMdd well suited for clustering *relational* data: If $V \subset X$, then $D$ can always be computed from $R$. *Relational fuzzy c-medoids* (RFCMdd) refers to the case that the FCMdd model is applied to relations $R$ in this way. FCMdd and RFCMdd are equivalent for object data $X$, i.e.

$$J_{\mathrm{RFCMdd}}(U,V;R(X)) = J_{\mathrm{FCMdd}}(U,V;X) \, .$$

RFCM and RFCMdd produce good (and very similar) results when Euclidean distances are used to compute $R$ from object data $X$ containing spherical clusters. To illustrate this an object data set $X \in \mathrm{IR}^2$ containing **50** points from a Gaussian distribution with mean **(0,0)** and variance 1, and **50** points from a Gaussian distribution with mean **(0,10)** and variance 1 has been randomly generated. From this object data set $X$ a relational data set $R_1$ using *Euclidean* distances was computed, with

$$r_{jk}^{\,2} = (x_j - x_k) \cdot (x_j - x_k)^T, \qquad\qquad (8)$$

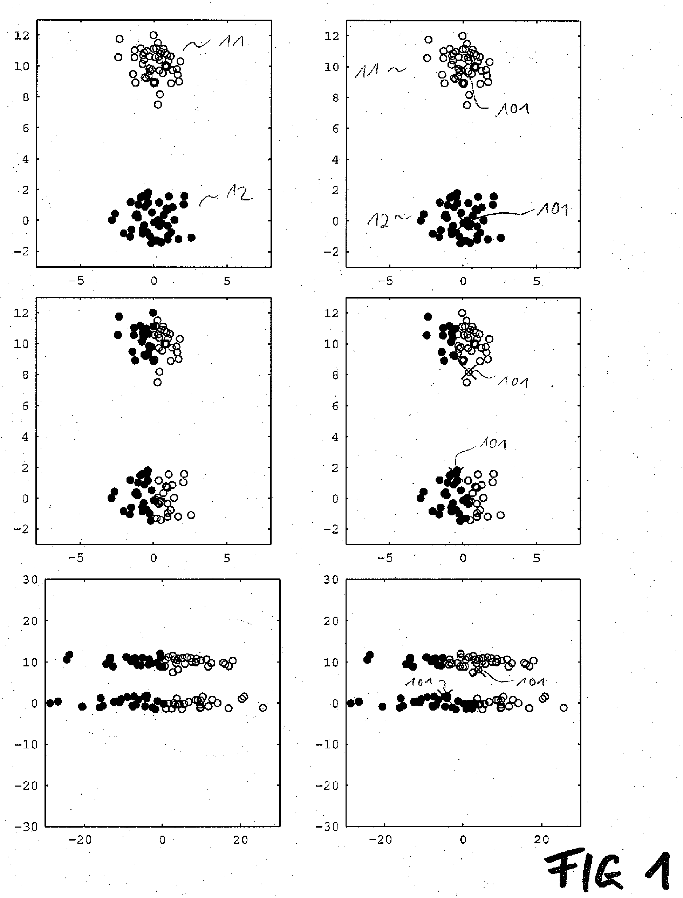

*j,k*=1,...,**100.** The first row in Fig. 1 shows the clustering results obtained with RFCM (left) and RFCMdd (right), respectively, for *c*=2, *m*=2, *t*=10.

Each point $x_k$, *k*=1,...,**100,** is plotted as "o" if it has a higher membership in a first cluster, i.e. if $u_{1k} > u_{2k}$, and as "•" otherwise. For both methods, all points of the top point cloud are correctly assigned to one cluster 11, and all the other points are <u>correctly</u> assigned to another cluster 12. The top right view of Fig. 1 shows the RFCMdd cluster centres 101 as "x". Each cluster centre 101 is located on a data point (medoid). Furthermore, each cluster centre 101 is correctly placed roughly in the middle of one of the point clouds. In the second row of Fig. 1 the same experiment was repeated, but with a relational data set $R_2$ computed from $X$ using a *matrix norm*

$$r_{jk}^{\,2} = (x_j - x_k) \cdot A \cdot (x_j - x_k)^T, \qquad\qquad (9)$$

*j,k*=1,...,**100,** with $A = \begin{pmatrix} 100 & 0 \\ 0 & 1 \end{pmatrix}$. In this non-Euclidean example both methods, RFCM and RFCMdd, fail. About one half of each cloud is assigned to one cluster, and the rest is assigned to the other cluster. The clouds are (approximately) vertically divided, i.e. the points to the left belong to one cluster, and the points to the right belong to the other cluster. A similar result is achieved in the bottom row of Fig. 1. Here, the object data set **X** is transformed into another object data set **Y** using

$$y_k = x_k \cdot B, \qquad (10)$$

**k=1,...,100,** where $B = \begin{pmatrix} 100 \\ 01 \end{pmatrix}$. This transformation simulates a data set whose features are on different scales, which occurs very often in real world data sets. Then a relational data set **R₃** was computed from **Y** using Euclidean distances. This yields the same relational data set as before, i.e. **R₂=R₃,** since

$$(y_j - y_k) \cdot (y_j - y_k)^T \qquad (11)$$

$$= (x_j \cdot B - x_k \cdot B) \cdot (x_j \cdot B - x_k \cdot B)^T \qquad (12)$$

$$= (x_j - x_k) \cdot B \cdot B^T \cdot (x_j - x_k)^T \qquad (13)$$

$$= (x_j - x_k) \cdot A \cdot (x_j - x_k)^T. \qquad (14)$$

So generally, always equal relational data sets **R₂=R₃** are obtained if **B·B^T=A.**

Clusters in *object* data sets containing ellipsoidal point clouds (like those in the bottom row of Fig. 1) can be found by so-called *Gustafson Kessel* (GK) clustering as described in Gustafson, E.E. and Kessel, W.C., "Fuzzy clustering with a covariance matrix", in IEEE International Conference on Decision and Control, San Diego, pages 761-766, 1979. The GK model uses the FCM objective function (1) with a matrix norm

$$d_{ik}^2 = (v_i - x_k) \cdot A_i \cdot (v_i - x_k)^T. \qquad (15)$$

The similarity between (9) and (15) and the difference between **R** and **D** are important. Optimization of the GK model is done by randomly initializing **V,** initializing **A_i,** $i = 1,...,c$, as **pxp** unit matrices, and then alternatingly updating **U** by (3) with (15), **V** by (4), and **A_i** by

$$A_i = (\rho_i \det S_i)^{1/p} \cdot (S_i^T \cdot S_i) \cdot S_i^T, \qquad (16)$$

with cluster volumes ρ*ᵢ*>0, *i*=1,...,*c*, and local covariance matrices

$$S_i = \sum_{k=1}^{n} u_{ik}^m \cdot (v_i - x_k)^T \cdot (v_i - x_k), \qquad (17)$$

*i*=1,...,*c*. For simplicity ρ**₁**=...=ρ**_c**=1 is set here.

As pointed out above, clusters in relational data can be found whose object data representations contain ellipsoidal clusters, when the relational data are mapped to object data first, e.g. using Sammon's mapping, and then performing GK clustering on these projected data. This global approach is not very efficient, since two tightly related optimization problems have to be solved independently. Moreover, the errors from the subsequent projection and clustering steps accumulate and sum up to a relatively high overall error. A modification of FNP combining Sammon's mapping with GK clustering might reduce this error, but it would still contain a *global* projection and would therefore not be very efficient.

Although the discussed relational clustering methods can cluster relational data, they are not able to identify ellipsoidal clusters.

The object of the invention is thus to develop a method and a system for finding ellipsoidal clusters in relational data that can achieve both precise clustering and high efficiency.

In accordance with the invention this object is achieved by a method in accordance with claim 1 and by a system in accordance with claim 9. Further embodiments of the invention are produced by the remaining claims.

The method for finding ellipsoidal clusters in relational data, the latter describing relations between physical entities, comprises the steps of computing relations between pairs of physical entities based on physical measurements, and clustering the physical entities using a clustering algorithm. The clustering algorithm processes the relations directly as relational data by creating object data only locally. Furthermore, the clustering algorithm uses metrics for computing ellipsoidal clusters.

The system for finding ellipsoidal clusters in relational data that describe relations between physical entities, has means to execute this method.

Said method and said system have the advantage of defining useful cluster structures while allowing efficient computation.

In accordance with an embodiment of the invention the relations can be distances. This allows for the clustering of i. e. sensors, mobile units etc., when only their distances relative to each other are known.

In accordance with another embodiment of the invention the relations can be similarity values. By computing similarity values, certain types of physical entities such as documents can be clustered.

In accordance with yet another embodiment of the invention Sammon's mapping can be used for the local creation of object data. This implementation is straight forward as Sammon's mapping is well known in the art.

Alternatively, triangulation can be used for the local creation of object data. Triangulation provides an efficient means to create local object data.

In accordance with an embodiment of the invention, norm inducing matrices can be used as metrics for computing ellipsoidal clusters. Norm inducing matrices are efficient tools for the definition of ellipsoidals.

Alternatively, Minkowsky norms can be used as metrics for computing ellipsoidal clusters.

In accordance with another embodiment of the invention the clustering algorithm can be a fuzzy clustering algorithm with the following operations: Firstly, cluster centres are selected as medoids among the physical entities. Secondly, a partition matrix and a set of cluster centres are initialized. Afterwards, components of each measured relation are computed by triangulation. Then, the following sequence of operations is iteratively executed: Firstly, covariance matrices are computed based on the partition matrix and the cluster centres, using the components as local object data. Then, the norm inducing matrices are computed based on the covariance matrices. Thirdly, norm distances are computed based on the norm inducing matrices and the components. Afterwards, the partition matrix is updated based on the normed distances. Finally, new cluster centres are selected by minimizing an objective function, the latter depending on the partition matrix, the cluster centres, and the normed distances.

In accordance with an embodiment of the invention the physical entities can be sensors in a self-organizing sensor network. The sensors have means to make the physical measurements. This embodiment allows a variety of applications in automation.

In accordance with a further embodiment of the invention the sensors can be smoke or fire sensors. A fire control system has output means to present the ellipsoidal clusters as fire sources. This embodiment allows quick identification of fire sources in case of an emergency.

In accordance with yet another embodiment of the invention the physical entities are mobile units. The mobile units have means to make the physical measurements. This embodiment allows for a variety of applications in robotics.

In accordance with a further embodiment of the invention the system has means to control one or more flocks of mobile units by identifying groups of mobile units with the ellipsoidal clusters. This allows applications in robotics, traffic management and automatic flock control.

In accordance with yet another embodiment the physical entities are genes. Furthermore, the system has DNA Microarray technology means to make the physical measurements and output means to present the ellipsoidal clusters as groups of related genes. This embodiment provides a powerful tool for the analysis of regulatory genetic networks.

In accordance with another embodiment of the invention the physical entities are documents or files. The physical measurements describe properties of the documents or files. Finally, the system has output means to present the ellipsoidal clusters as groups of related documents or files. This embodiment allows for efficient classification of documents. Due to effects of transitivity it is possible to cluster documents with low similarity if they belong to the same group.

The computer program product is directly loadable into the internal memory of a digital computer and comprises software code portions for performing the steps of the above mentioned method when said program is run on a digital computer.

On the computer usable medium a computer program is stored. The computer program comprises software code portions for performing the steps of the above mentioned method when said program is loaded into the internal memory of a digital computer.

Exemplary embodiments of the invention are explained in more detail below with reference to the drawings. The figures show:

Figure 1    clustering results for RFCM (left) and RFCMdd (right),

Figure 2    the cosine theorem and the computation of the vertical and horizontal components of the difference vectors,

Figure 3    the sign of the vertical components depending on the relative position to a second anchor point, left: positive, right: negative,

Figure 4    clustering results for RGKMdd,

Figure 5    clustering results for RFCMdd (left) and RGKMdd (right),

Figure 6    ellipsoidal clusters which take into account transitivity effects.

Figure 1 has already been discussed with the state of the art.

In an embodiment of the invention, a *local* approach that combines the triangulation with GK clustering on medoids is considered. Due to the limited space only the two-dimensional case ($p$=2) is discussed in this embodiment. However, multidimensional embodiments are equally possible.

If the cluster centres are medoids, then *Euclidean* distances

$$d_{ik}^{2} = (v_i - x_k) \cdot (v_i - x_k)^T \qquad (18)$$

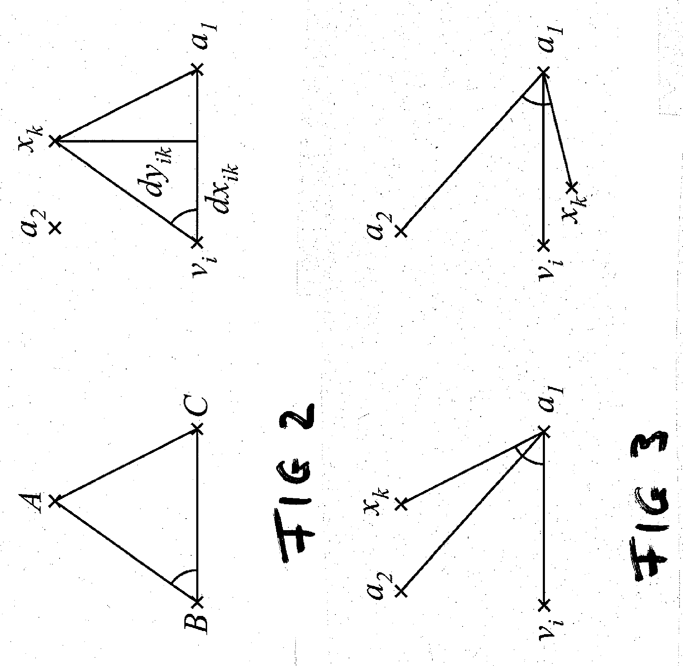

can be taken from **R**, just as in RFCMdd, but the mixed terms in the *matrix norm* needed for GK at (15) are not available. However, the relation between the vertical and horizontal components of the difference vectors $v_i$-$x_k$, $i$=1,...,$c$, $k$=1,..., $n$, can be obtained using triangulation. To do so, the cosine theorem (Fig. 2 left) is considered:

$$\cos \angle ABC = \frac{\overline{AB}^2 + \overline{BC}^2 - \overline{AC}^2}{2 \cdot \overline{AB} \cdot \overline{BC}}. \qquad (19)$$

For the special cases $\overline{AB} = 0$ and $\overline{BC} = 0$ the definition $\angle \mathbf{ABC} = \pi$ is used. Choosing an (index of an) anchor point $a_1 \in \mathbf{X}$ that specifies the positive horizontal axis (Fig. 2 right), the vertical and horizontal components $(dx_{ik}, dy_{ik}) = v_i$-$x_k$ can be computed as

$$dx_{ik} = d_{ik} \cdot \cos \angle a_1 v_i x_k, \qquad (20)$$

$$dy_{ik} = \pm d_{ik} \cdot \sin \angle a_1 v_i x_k. \qquad (21)$$

To determine the sign $\pm$ in (21), the positive *vertical* axis has to be specified, e.g. by introducing another (index of an) anchor point $a_2 \in \mathbf{X}$. In Fig. 2 (right), for example, the sign of $dy_{ik}$ is positive. Generally, the sign of $dy_{ik}$ is positive, if

$$|\angle v_i a_1 a_2 - \angle v_i a_1 x_k| \geq \angle x_k a_1 a_2. \qquad (22)$$

For example, in the left view of Fig. 3 $\angle v_i a_1 a_2 + \angle x_k a_1 a_2 = \angle v_i a_1 x_k$ is true, so $dy_{ik}$ is positive.

In the right view of Fig. 3 $\angle v_i a_1 a_2 + \angle v_i a_1 x_k = \angle x_k a_1 a_2$ is true, so $dy_{ik}$ is negative. The sign of $dy_{ik}$ is undefined, if $a_1$, $a_2$ and $v_i$ are on a common line. Using medoids $v_i \in X$, this undefined case can be avoided if for all $k=1,...,n$ :

$$\sin \angle a_1 x_k a_2 \neq 0. \qquad (23)$$

Thus, $a_1$ and $a_2$ can simply be picked so that (23) holds for all $k=1,...,n$. Using $dx_{ik}$ and $dy_{ik}$, $i=1,...,c$, $k=1,...,k$, the matrix distances (15) and the covariance matrices (17) for GK clustering can finally be computed:

$$d_{ik}^{\,2} = (dx_{ik}, dy_{ik}) \cdot A_i \cdot (dx_{ik}, dy_{ik})^T, \qquad (24)$$

$$S_i = \sum_{k=1}^{n} u_{ik}^{m} \cdot (dx_{ik}, dy_{ik})^T \cdot (dx_{ik}, dy_{ik}), \qquad (25)$$

$i=1,...,c$, $k=1,...,n$. Now the overall RGKMdd algorithm (for $p=2$) can be summarized. In order to keep the algorithm clearer, references to *objects* instead of *indices of objects* are used, e.g., saying "select $v_i \in X$" instead of "select the index $j \in \{1,...,n\}$, so that $v_i = x_j$".
RGKMdd algorithm

1. input $\mathbf{R} \in \mathbf{IR}^{n \times n}$
2. input $t \in \{1,2,...\}$, $c \in \{2,3,...,n-1\}$, $m > 1$
3. randomly initialize fuzzy partition $U$
4. pick anchor points $a_1, a_2 \in X$ that are not collinear,
5. randomly initialize cluster centres $V = \{v_1,...,v_c\} \subset X \backslash \{a_1, a_2\}$

6. initialize norm inducing matrices $A_i = \begin{pmatrix} 1 & 0 \\ 0 & 1 \end{pmatrix}$, $i=1,...,c$

7. for $\tau = 1,...,t$
8. compute distances $DX$ and $DY$ using triangulation
9. compute covariance matrices $S_1,...,S_c$
10. compute norm inducing matrices $A_1,...A_c$
11. update partition U using the FCM formula
12. select cluster centres $V$ by minimizing $J_{ij}$ (exhaustive)
13. end for
14. output $U$, $V$, $A_1,...,A_c$

An *object* data set version of RGKMdd can also be defined, *Gustafson Kessel clustering with medoids* (GKMdd), that does not require triangulation, since the object data points are explicitly available. The GKMdd algorithm then reads:
GKMdd algorithm

1. input $X \subset \mathbf{IR}^p$
2. input $t \in \{1,2,...\}$, $c \in \{2,3,...,n-1\}$, $m > 1$
3. initialize $U \in M_{fcn}$ (2)
4. initialize $V = \{v_1,...,v_c\} \subset X$

5. initialize $A_i = \begin{pmatrix} 1 & 0 \\ 0 & 1 \end{pmatrix}$, $i=1,...,c$

6. for $\tau = 1,...,t$
7. select $V$ using (7), (6), (15)

8. compute $A_1,...,A_c$ using (16), (17)
9. compute U using (3)
10. end for
11. output $U$, $V$, $A_1,...,A_c$

These two algorithms, GKMdd and RGKMdd are equivalent for two-dimensional object data, if the relational data set is computed using the Euclidean norm, i.e. for all $X \subset \mathrm{IR}^2$ :

$$J_{\mathrm{RGKdd}}(U,V,A_1,...,A_c;R_{\mathrm{Euclidean}}(X)) = J_{\mathrm{GKdd}}(U,V,A_1,...,A_c;X) \ .$$

Both GKMdd and RGKMdd use well-defined objective functions, namely (1) with (15), so they are no cluster *estimation* but cluster *optimization* methods.

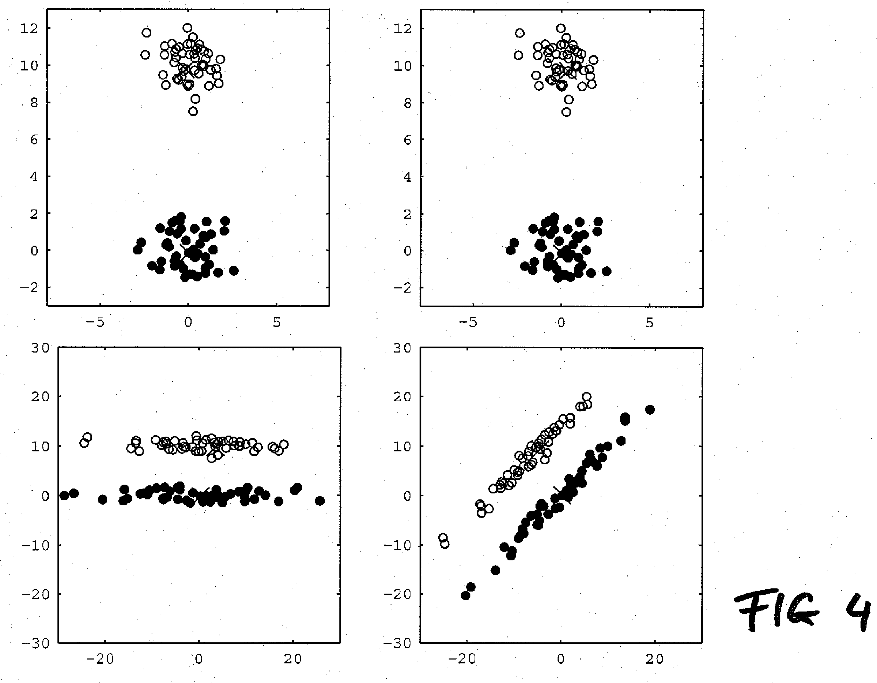

The experiments from Fig. 1 were repeated with RGKMdd, c=2, **m=2, t=10.** Fig. 4 shows the results, from top left to bottom right: spherical clusters and Euclidean distance, spherical clusters and non-Euclidean distance, horizontal elliptical clusters and Euclidean distance, rotated horizontal clusters and Euclidean distance.

In the top left view spherical clusters and Euclidean distance were used, just as in the first row of Fig. 1. In the top right view spherical clusters and non-Euclidean distance were used, just as in the second row of Fig. 1. In the bottom left view horizontal elliptical clusters and Euclidean distance were used, just as in the third row of Fig. 1. Finally, in the bottom right view rotated elliptical clusters and Euclidean distance (this case is not covered in Fig. 1) were used. In all four cases RGKMdd produced the correct results: Every point is assigned to the correct cloud, even when non-Euclidean distances or ellipsoidal clouds are used.

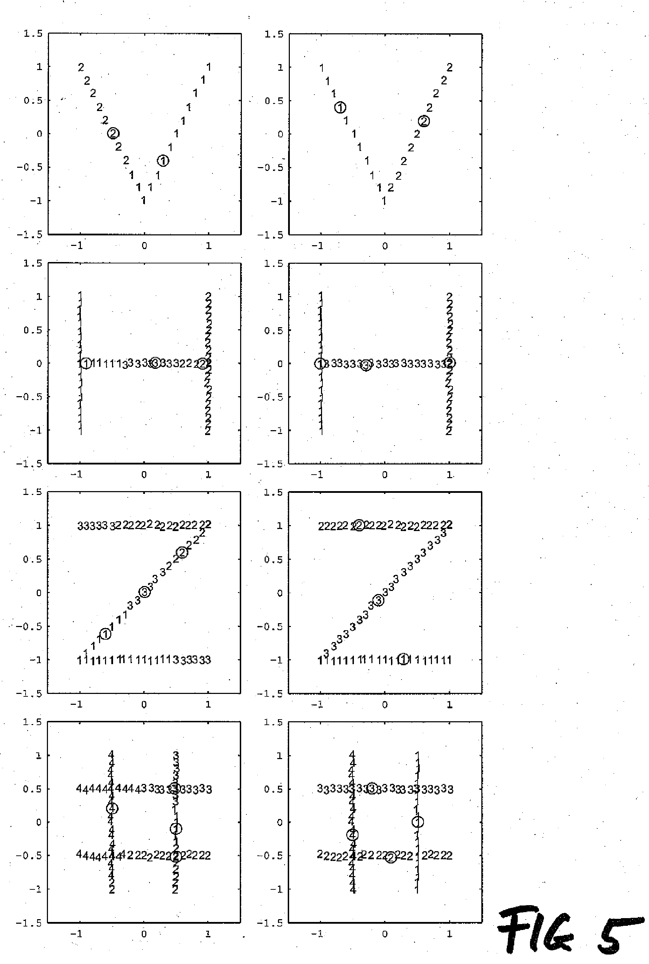

Four more experiments are shown in Fig. 5 comparing RFCMdd with RGKMdd, both with **c=2, m=2, t=10.** Data sets **"V",** "H", "Z", and "#" were artificially generated by selecting points on the grid **{-1,-0.9,...,1}×{-1,-0.9,...,1},** so that the data set looks like the characters "V", "H", "Z", and "#". Then, Gaussian noise with mean (0,0) and variance 0.01 was added to each point. This noise is useful here to apply RGKMdd, because otherwise it would be much harder to find suitable anchor points $a_1, a_2$ that satisfy (23). Since some of the data sets contain more than two clusters, the points are displayed as 1, 2, etc., depending on which cluster they have maximum membership in. The cluster centres are additionally marked with circles ("o"). RFCMdd only yields good results for the data set "V" (top left view in Fig. 5). For the other data sets "H", "Z", and "#", RFCMdd gives bad assignments. RGKMdd yields the expected results for all four data sets.

The embodiment works well with relational data that are (at least approximately) equivalent to object data containing non-circular clusters, or that can be (at least approximately) generated from object data with circular clusters using non-Euclidean norms. The examples presented show that conventional relational clustering algorithms such as relational fuzzy c-means (RFCM) or relational fuzzy c-medoids (RFCMdd) produce bad cluster partitions for this family of relational data sets, because they do not take into account the cluster shapes.

In order to overcome this problem, a relative of the Gustafson Kessel clustering model (that does consider the cluster shape) was defined. In order to efficiently handle relational data, this new model uses medoids, hence the name Gustafson Kessel clustering with medoids (GKMdd). If *relational* data are used, the covariance matrices and the matrix distances are locally computed using triangulation on p anchor points. *Relational* Gustafson Kessel clustering with medoids (RGKMdd) was introduced. For the family of relational data sets specified above, RGKMdd produces very good cluster partitions.

The previous embodiment presents a new approach to relational clustering using higher-order prototypes. Further embodiments can include higher dimensions. Also, other metrics than *Euclidean* distances can be used for triangulation, for example Minkowsky norms. The Minkowsky norm is defined by the following formula:

$$| x - y |_q = \left( \sum_{j=1}^{p} | x^{(j)} - y^{(j)} |^q \right)^{\left( \frac{1}{q} \right)}, q > 0 \qquad (26)$$

In other embodiments real relational data sets are used, i.e. those that do not possess any equivalent object data representation or real-world relational data sets, e.g. internet data or gene ontology data.

In the previous embodiment norm inducing matrices were computed by approximation from relational data. The approximation was implemented with triangulation. However, other approximation methods such as local optimization of a Sammon cost function are possible. Sammon's mapping allows a non-linear mapping of relational data to object data and is well known in the art.

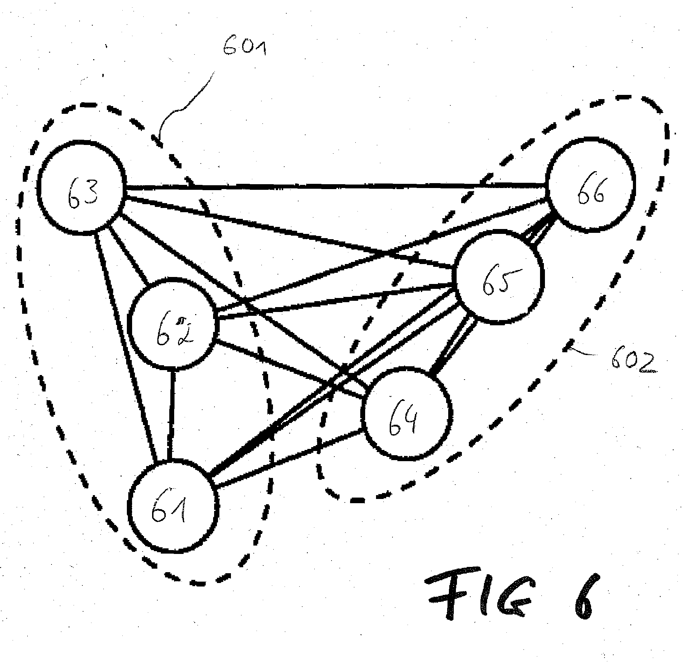

Figure 6 shows a first cluster 601 encompassing physical entities 61, 62, 63 and a second cluster 602 encompassing physical entities 64, 65, 66.

The previously described method has a variety of applications and can be implemented in different contexts and systems.

For example, the physical entities can be sensors in a self-organizing sensor network. The sensors can make physical measurements, for example of a signal strength required to contact another sensor by wireless communication. The signal strength can be used as a distance measure, forming the relation between two sensors. These relations build the relational data set on which the clustering algorithm operates.

In case the sensors are smoke or fire sensors, in one scenario only sensors in areas on fire will be signaling. The signaling sensors can be clustered with one of the methods described above. Thus, ellipsoidal clusters can be identified, marking fire sources. These fire sources can be displayed on a screen of a fire control system.

Looking at figure 6, the physical entities 61, 62, 63 and 64, 65, 66 could be the signaling fire sensors. Although the physical entities 61 and 64 are close to one another, they do not belong to the same clusters, i. e. fire sources, as they might be separated by a wall. Ellipsoidal clustering allows for identification of fire sources which can spread along hallways, for example. Thus, the first cluster 601 could be a large conference room and the second cluster 602 could be a hallway.

In another scenario, the physical entities 61, 62, 63, 64, 65, 66 could be a flock of mobile units, i. e. robots. The mobile units are equipped with means to measure distances between them. Again, the measure could be the signal strength required for wireless communication, or the signal quality received. Other sensor systems are equally possible, for example radar, laser, infrared or video sensors. From the physical measurement made by any given sensor system, distances between the mobile units can be computed. These distances will form the relations on which the clustering algorithm operates.

Thus, the physical entities 61, 62, 63 could be robots or cars moving on a traffic lane or through a hallway, and the physical entities 64, 65, 66 could be mobile units on a different path. Again, ellipsoidal clustering allows accurate recognition of individual flocks in movement. Therefore the method can be applied to automated flock control, as in a traffic management system.

In yet another scenario the physical entities 61, 62, 63, 64, 65, 66 could be genes in a regulatory genetic network. Here, DNA Microarray technology provides means for physical measurement of the individual expression rate of each gene. Genes with high expression rates can be considered to be related. More sophisticated methods are available for constructing regulatory genetic networks, that is relational data sets based on DNA Microarray measurements. These relational data sets can be taken as the relations on which the clustering algorithm operates.

The following table illustrates such a relational data set:

| Similarity | Gene A | Gene B | Gene C |
|---|---|---|---|
| Gene A | 100% | 98% | 3% |
| Gene B | 98% | 100% | 5% |
| Gene C | 3% | 5% | 100% |

Again, ellipsoidal clustering allows accurate clustering of genes. For example the gene corresponding to physical entity 61 in figure 6 seems closely related to the gene corresponding to physical entity 64. Still they belong to different clusters. Through ellipsoidal clustering, these clusters can be correctly identified.

In still another scenario the physical entities 61, 62, 63, 64, 65, 66 could be documents or files, even hypertext or XML-documents on the internet. Here, the relation in question will be the degree of similarity between documents. For example, if a physical text document on paper is scanned, the scanning software can identify layout characteristics of the paper document. These layout characteristics are based on physical measurements made by the scanner. By comparing layout characteristics, relations between different paper documents can be computed. These relations then form the relation data set on which the clustering algorithm operates. Looking at figure 6, it is apparent that the documents corresponding to physical entities 61 and 64 have a high degree of similarity but belong to different clusters. Here, the effects of transitivity are covered by the ellipsoidal cluster structure. For example, in figure 6 physical entity 61 has a high degree of similarity with physical entity 62 and physical entity 62 has a high degree of similarity with physical entity 63. Therefore, physical entities 61 and 63 are clustered in the same first cluster 601, even though their corresponding degree of similarity is rather low.

**Claims**

1. A method for finding ellipsoidal clusters in relational data, the latter describing relations between physical entities, said method comprising the steps of:

   - computing relations between pairs of physical entities based on physical measurements, and
   - clustering the physical entities using a clustering algorithm, the clustering algorithm

      - processing the relations directly as relational data by creating object data only locally, and
      - using metrics for computing ellipsoidal clusters.

2. Method according to claim 1,

   - the relations being distances.

3. Method according to claim 1,

   - the relations being similarity values.

4. Method according to claim 1,

   - using Sammon's mapping for the local creation of object data.

5. Method according to claim 1,

   - using triangulation for the local creation of object data.

6. Method according to claim 1,

   - using norm inducing matrices as metrics for computing ellipsoidal clusters.

7. Method according to claim 1,

   - using Minkowski norms as metrics for computing ellipsoidal clusters.

8. Method according to claim 1, 5 and 6,

   - the clustering algorithm being a Fuzzy clustering algorithm with the following operations:
   - selecting cluster centres as medoids among the physical entities,
   - initializing a partition matrix and a set of cluster centres,
   - iteratively executing the following sequence of operations:

      a) computing components of the relations by triangulation,
      b) computing covariance matrices based on the partition matrix and the cluster centres, using the components as local object data,
      c) computing the norm inducing matrices based on the covariance matrices,
      d) computing normed distances based on the norm inducing matrices and the components,
      e) updating the partition matrix based on the normed distances,
      f) selecting new cluster centres by minimizing an objective function, the latter depending on the partition matrix, the cluster centres, and the normed distances.

9. A system for finding ellipsoidal clusters in relational data, the latter describing relations between physical entities, with means to execute the method of claim 1.

10. System according to claim 9, with

   - the physical entities being sensors in a self-organizing sensor network, and
   - the sensors having means to make the physical measurements.

**11.** System according to claim 10, with

- the sensors being smoke or fire sensors,
- a fire control system having output means to present the ellipsoidal clusters as fire sources.

**12.** System according to claim 9, with

- the physical entities being mobile units, and
- the mobile units having means to make the physical measurements.

**13.** System according to claim 12,

- with means to control one or more flocks of mobile units by identifying groups of mobile units with the ellipsoidal clusters.

**14.** System according to claim 9, with

- the physical entities being genes,
- DNA Microarray technology means to make the physical measurements, and
- output means to present the ellipsoidal clusters as groups of related genes.

**15.** System according to claim 9, with

- the physical entities being documents or files,
- the physical measurements describing properties of the documents or files, and
- output means to present the ellipsoidal clusters as groups of related documents or files.

**16.** A computer program product,
directly loadable into the internal memory of a digital computer, comprising software code portions for performing the steps of claim 1 when said program is run on a digital computer.

**17.** A computer usable medium,
on which a computer program is stored, the computer program comprising software code portions for performing the steps of claim 1 when said program is loaded into the internal memory of a digital computer.

FIG 1

EP 1 724 703 A1

**FIG 2**

**FIG 3**

FIG 4

FIG 5

FIG 6

**EP 1 724 703 A1**

European Patent
Office

**EUROPEAN SEARCH REPORT**

Application Number

EP 05 10 4252

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | GUSTAFSON D E ET AL: "Fuzzy clustering with a fuzzy covariance matrix" PROCEEDINGS OF THE 1978 IEEE CONFERENCE ON DECISION AND CONTROL INCLUDING THE 17TH SYMPOSIUM ON ADAPTIVE PROCESSES IEEE NEW YORK, NY, USA, 1979, pages 761-766, XP008051551 * the whole document * | 1,9,16, 17 | G06K9/62 |
| A | HATHAWAY R J ET AL: "On relational data versions of c-means algorithms" PATTERN RECOGNITION LETTERS, NORTH-HOLLAND PUBL. AMSTERDAM, NL, vol. 17, no. 6, 15 May 1996 (1996-05-15), pages 607-612, XP004007572 ISSN: 0167-8655 | | |
| A | KRISHNAPURAM R ET AL: "Low-complexity fuzzy relational clustering algorithms for Web mining" IEEE TRANSACTIONS ON FUZZY SYSTEMS IEEE USA, vol. 9, no. 4, August 2001 (2001-08), pages 595-607, XP002343051 ISSN: 1063-6706 | | TECHNICAL FIELDS SEARCHED (Int.Cl.7) G06K |

The present search report has been drawn up for all claims

| Place of search | Date of completion of the search | Examiner |
|---|---|---|
| The Hague | 1 September 2005 | Sonius, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BEZDEK, J. C.** Pattern Recognition with Fuzzy Objective Function Algorithms. Plenum Press, 1981, 65-70
- **R. KRISHNAPURAM ; A. JOSHI ; O. NASRAOUI ; L. YI.** Low-complexity fuzzy relational clustering algorithms for web mining. *IEEE Transactions on Fuzzy Systems,* August 2001, vol. 9 (4), 595-607

- Fuzzy clustering with a covariance matrix. **GUSTAFSON, E.E. ; KESSEL, W.C.** IEEE International Conference on Decision and Control. 1979, 761-766